# EUROPÄISCHE PATENTSCHRIFT

(11) **EP 3 107 843 B1**
(45) Veröffentlichungstag und Bekanntmachung des Hinweises auf die Patenterteilung: **17.05.2017**
(21) Anmeldenummer: 15706199.5
(22) Anmeldetag: 17.02.2015
(51) Int. Cl.: B65G 1/137

(54) **VERFAHREN UND STATION ZUM KOMMISSIONIEREN VON ARTIKELN NACH DEM WARE-ZUM-MANN PRINZIP**
METHOD AND STATION FOR PICKING ITEMS ACCORDING TO THE GOODS-TO-PERSON PRINCIPLE
PROCÉDÉ ET POSTE DE PRÉPARATION DE COMMANDES D'ARTICLES SELON LE PRINCIPE 'MARCHANDISE VERS HOMME'

(30) Priorität: 19.02.2014 DE 102014102092
(43) Veröffentlichungstag der Anmeldung: 28.12.2016
(73) Patentinhaber: Dematic GmbH, 63150 Heusenstamm (DE)
(72) Erfinder: MEURER, Hans Christoph, 64380 Rossdorf (DE)
(74) Vertreter: Moser Götze & Partner Patentanwälte mbB
(86) Internationale Anmeldenummer: PCT/EP2015/053260
(87) Internationale Veröffentlichungsnummer: WO 2015/124547

(56) Entgegenhaltungen:
- EP-A1- 1 790 591
- EP-A1- 2 607 271
- WO-A1-2007/068406
- WO-A1-2013/090962
- FR-A1- 2 713 612
- US-A1- 2013 312 371

## Beschreibung

Die Erfindung betrifft ein Verfahren zum Kommissionieren von Artikeln nach dem Ware-Zum-Mann Prinzip an einer Kommissionierstation, in der Artikel in Auftrags-Ladehilfsmittel kommissioniert werden, und eine entsprechende Kommissionierstation.

Es ist allgemein bekannt Kommissionierstationen für eine Kommissionierung nach dem Ware-zum-Mann Prinzip zu betreiben. Dabei werden die Waren oder Artikel eines Auftrags an die jeweilige Kommissionierstation transportiert, wozu sie meist in Behältern, auf Tablaren etc. eingebracht sind. Dort werden sie aus den sogenannten Lager- oder Produktbehältern entnommen und in die entsprechenden Behälter, Tablare etc. eines Auftrags, sogenannte Auftragsbehälter, eingelegt.

Dieser Vorgang wiederholt sich üblicherweise bis der jeweilige Auftrag oder Teil-Auftrag beim Zonenkommissionieren abgearbeitet ist.

Meist kommissioniert der Arbeiter dabei zur Durchsatzerhöhung mehrere Aufträge parallel, so dass auch mehrere Auftragsbehälter parallel in der Kommissionierstation vorgehalten werden.

Der Kommissionier kann daher mittels Anzeigen angezeigt bekommen, wo die Artikel hineinzulegen sind. Entsprechend wird dieses Put-To-Light genannt. Werden zudem mehrere Produktbehälter analog an die Kommissionierstation transportiert, kann auch ein Pick-To-Light Verfahren durchgeführt werden, so dass auch die Artikelentnahme vereinfacht wird.

Ein Put-Platz ist also ein Platz für Auftragsbehälter, in welchen die Ware/Artikel aus den Lagerbehältern vom Kommissionierer entsprechend hineingelegt werden.

Entsprechend ist eine Put-To-Light Anzeige eine Anzeige für den Kommissionierer, in welchen Auftragsbehälter er den gerade aus dem Produktbehälter genommenen Artikel oder mehrere Artikel oder die Packeinheit etc. einlegen soll.

Umgekehrt ist der Pick-Platz der Platz eines Produktbehälters, aus dem der Kommissionierer die Artikel etc. entnimmt. Entsprechend ist eine Pick-To-Light Anzeige eine Anzeige, die dem Kommissionierer den Produktbehälter und/oder ggf. die Artikel und/oder deren Menge für den Kommissionierschritt anzeigt.
Aus der EP 2 050 695 A1, der EP 2 098 464 A1 und der WO 2013/033743 A1 sind entsprechende Kommissionierstationen bekannt, bei denen mehrere Auftragsbehälter in der Kommissionierstation gleichzeitig vorgehalten und von einem zentralen Platz aus mit wechselnden Produktbehältern mit Artikel kommissioniert werden. Aus der FR 2 713 612 A1 ist ein Verfahren nach dem Oberbegriff des Anspruchs 1 bekannt. Durch die Präsentation von mehreren Auftragsbehältern werden die Anforderungen an die Sequenz der Produktbehälter zwar verringert.
Dies bedingt jedoch, dass die Kommissionierstationen mit einer Anbindung an die zentrale Fördertechnik für jeden der Put-Plätze ausgerüstet sind, was den Aufbau komplex und teuer sowie aufwendig in der Wartung macht sowie viel Platz beansprucht. Da ein Auftrag seinen Put-Platz nicht verändert, sind die Kommissioniervorgänge gleichmäßig auf alle Put-Plätze verteilt und der Kommissionierer muss relativ weite Wege zurücklegen.
Somit besteht weiterhin Bedarf an einer vereinfachten Kommissionierlösung nach dem Ware-zum-Mann Prinzip, bei dem der Aufbau der Kommissionierstationen vereinfacht und das Kommissionieren für den Kommissionierer erleichtert wird, ohne dass der Durchsatz verringert wird.
Diese Aufgabe wird durch das in Anspruch 1 wiedergegebene Kommissionierverfahren bzw. der in Anspruch 7 angegebenen Kommissionierstation gelöst.

Erfindungsgemäß ist erkannt worden, dass wenn die Auftrags-Ladehilfsmittel in einer Reihe durch die Kommissionierstation gefördert werden und dabei der jeweilige Put-Platz des Ladehilfsmittels in der Reihe wechselt, es möglich ist, die fördertechnische Anbindung zu vereinfachen, da nicht jeder Put-Platz eine Anbindung benötigt, da die Ladehilfsmittel nicht wahlfrei auf jeden freien Platz gefahren werden. Die Ladehilfsmittel werden also mit anderen Worten in einer "historischen Reihe" durch die Kommissionierstation gefördert, d.h. die ältesten Ladehilfsmittel stehen am Beginn der Reihe und die jüngsten am Ende.

Die Artikel können entweder direkt als solches gefördert werden, wenn dies die Artikeleigenschaften erlauben, oder in Produkt-Ladehilfsmitteln vorliegen und aus diesen kommissioniert werden.

Jedem Auftrags-Ladehilfsmittel ist also ein wechselnder Put-Platz zugeordnet. Mit anderen Worten, wird ein in der Reihe liegendes Auftrags-Ladehilfsmittel fertig kommissioniert und anschließend "entsorgt", können die nachfolgenden Auftrags-Ladehilfsmittel aufschließen, um wieder eine lückenlose Reihe herzustellen. Dabei wechseln diese dann ihren Put-Platz.

Somit verringern sich die Laufwege des Kommissionierers, da die ältesten Ladehilfsmittel bzw. Artikel in der Kommissionierstation am häufigsten Ziel des nächsten Kommissioniervorgangs sind, da die dazu gehörigen Ladehilfsmittel ebenfalls am längsten (i.S. der Transportzeit) zu der Kommissionierstation unterwegs waren und somit üblicherweise früher eintreffen. Die Kommissioniervorgänge verteilen sich also auf die ältesten Ladehilfsmittel in der Reihe.

In anderen Worten, die Artikel bzw. Produkt-Ladehilfsmittel für die Fertigstellung der Kommissionierung eines Auftrags-Ladehilfsmittels am Anfang der Reihe sind bereits vor anderen weiter hinten in der Reihe angefordert worden und kommen deshalb auch vor den anderen Produkt-Ladehilfsmitteln bzw. Artikel am Pick-Platz an, soweit der Förderweg zur Kommissionierstation dies erlaubt, da sie dafür am meisten Zeit hatten.

Somit wird auch der Haupt-Pick/Put-Platz, also derjenige am Anfang der Reihe, statistisch am häufigsten mit Artikeln versorgt. Somit muss der Kommissionierer weniger Wege zurücklegen.

Es hat sich z.B. gezeigt, dass somit in etwa 80 % aller Kommissioniervorgänge (Picks) auf die drei ältesten Auftrags-Ladehilfsmittel verteilen, wenn die Sequenzierungsregeln die Kommissionierung in die ältesten 6 Auftragsladehilfsmittel ermöglicht; die Kommissionierstation also über 6 Putz-Plätze verfügt.

Wenn aus einem Produkt-Ladehilfsmittel eine Kommissionierung von mehreren Auftrags-Ladehilfsmitteln oder aus mehreren Produkt-Ladehilfsmitteln ein Auftrags-Ladehilfsmittel möglich ist, kann zudem ein Serieneffekt zur Verbesserung des Durchsatzes erreicht werden.

Eine weitere Reduzierung der Sequenzierungsanforderungen kann erreicht werden, wenn mehr als ein, vorzugsweise zwei, Produkt-Ladehilfsmittel bzw. Artikel gleichzeitig an der Kommissionierstation im Zugriff stehen.

Erfindungsgemäß ist ferner vorgesehen, dass wenn ein Artikel bzw. Produkt-Ladehilfsmittel benutzt worden, d.h. der Kommissionierer gewünschte Artikel für den Kommissionierauftrag entnommen hat, diese sofort weitertransportiert werden und nächste Artikel bzw. Produkt-Ladehilfsmittel nachrücken. Es wird also nicht erst die Quittierung der fehlerfreien Ausführung des jeweiligen Kommissionierschritts abgewartet. Damit aber eine Korrektur möglich bleibt, wird der abgeführte Artikel bzw. das Produkt-Ladehilfsmittel in einer Pufferzone gehalten, die in Reichweite des Kommissionierers liegt. Somit hat der Kommissionierer ggf. bei einem Fehler noch Zugriff auf die Artikel, um noch weitere Artikel zu greifen oder Artikel zurückzulegen.

Wenn sowohl die Auftrags-Ladehilfsmittel als auch die Produkt-Ladehilfsmittel bzw. Artikel jeweils in einer Reihe durch die Kommissionierstation gefördert werden, ggf. in umgekehrten Förderrichtungen, kann eine noch stärker Aufweichung der Sequenzanforderung an beide Ladehilfsmittelarten bzw. Artikel erreicht werden, was z.B. beim Kommissionieren von Teilaufträgen Vorteile bringt.

Bei einer solchen n:m Anordnung können dann parallel mehrere Picks und Puts gleichzeitig abgearbeitet werden.

Bei den Ladehilfsmitteln kann es sich um Behälter, Tablare, Kartons usw. handeln.

In der Reihe wechselt der Put-Platz immer, wenn ein in der Reihe voraus liegendes Auftrags-Ladehilfsmittel fertig kommissioniert und weggefördert wird. Erfindungsgemäss wechselt der Put-Platz des Auftrags-Ladehilfsmittels, wenn ein historisch davorliegendes Auftrags-Ladehilfsmittel fertig kommissioniert und abgeführt (also aus der Reihe entfernt) wurde. Meist wird dies das erste Auftrags-Ladehilfsmittel in der Reihe sein. Es kommt aber auch vor, dass ein innerhalb der Reihe angeordnetes Auftrags-Ladehilfsmittel fertig kommissioniert und auf die abführende Fördertechnik abgegeben wurde. Dann rücken die danach stehenden Auftrags-Ladehilfsmittel auf. Ganz analog zu einer klassischen Staureihe.

Das Kommissionieren kann manuell durch einen Kommissionierer oder automatisch durch eine Kommissioniervorrichtung, wie z.B. einem entsprechend ausgerüsteten Roboter ausgeführt werden.

Beim manuellen Kommissionieren ist es sinnvoll, wenn dem Kommissionierer bei jedem Kommissioniervorgang der jeweilige Auftrags-Ladehilfsmittel angezeigt wird, wie z.B. durch eine Put-To-Light Anzeige. Interessant ist dabei aber gemäß der Erfindung die Tatsache, dass der Put-Platz eines Auftrags-Ladehilfsmittels wechselt. Daher ist es ebenfalls sinnvoll, wenn die Anzeige des jeweiligen Auftrags-Ladehilfsmittels mit dem Auftrags-Ladehilfsmittel mitwechselt. Dies geschieht vorzugsweise virtuell, d.h. die Anzeigen sind ortsfest und nur "Inhalt" wandert passend zum jeweiligen wechselnden Auftrags-Ladehilfsmittel.

Vorzugsweise werden die Auftrags-Ladehilfsmittel also in einer First-in-First-out (FIFO) Reihe durch die Kommissionierstation gefördert.

Die Erfindung betrifft ebenfalls eine entsprechende Kommissionierstation zum Kommissionieren von Artikeln nach dem Ware-Zum-Mann Prinzip, wobei Artikel aus Produkt-Ladehilfsmittel in Auftrags-Ladehilfsmittel kommissioniert werden und die Produkt-Ladehilfsmittel auf einer ersten Fördertechnik durch die Kommissionierstation gefördert werden und die Auftrags-Ladehilfsmittel auf einer zweiten Fördertechnik durch die Kommissionierstation gefördert werden.

Erfindungsgemäß werden die Auftrags-Ladehilfsmittel gemeinsam in einer Reihe auf der zweiten Fördertechnik und gemeinsam in einer Reihe auf der ersten Fördertechnik durch die Kommissionierstation gefördert und mindestens jedem Ladehilfsmittel ist ein wechselnder Put- Platz zugeordnet.

Somit kann, wie oben beschrieben, die Fördertechnik vereinfacht werden. Zudem kann die Ergonomie für den Kommissionierer verbessert werden (vgl. oben), da durch die verwendete FIFO Reihe sich die Kommissioniervorgänge auf die Auftrags-Ladehilfsmittel am Anfang der Reihe konzentrieren. Erfindungsgemäss ist jeder Put-Platz als einzeln steuerbarer und antreibbarer Förderabschnitt der zweiten Fördertechnik ausgebildet. Jedem Auftrags-Ladehilfsmittel ist dann ein wechselnder Put-Platz zugeordnet.

Wenn ein Auftrags-Ladehilfsmittel fertig kommissioniert ist, kann das Auftrags-Ladehilfsmittel von der zweiten Fördertechnik auf eine abführende Sammelfördertechnik abgeschoben werden. Dies kann manuell oder durch eine automatische Abschiebeeinrichtung, wie z.B. einem Pusher oder einem Riementransfer erfolgen. Üblicherweise wird dies das erste Auftrags-Ladehilfsmittel am Anfang der Reihe sein. Daher reicht es meist aus, wenn die Sammelfördertechnik dort an die zweite Fördertechnik anschließt. Es kann aber auch vorgesehen sein, dass die abführende Sammelfördertechnik angeordnet ist, um eine Übernahme oder ein Abschieben von einem Teil der Reihe oder gar der ganzen Reihe zu ermöglichen. Sie kann z.B. parallel zur zweiten Fördertechnik angeordnet sein.

Zur Erleichterung und Verbesserung des Kommissionierens ist vorzugsweise jedem Kommissionierplatz eine Kommissionieranzeige zugeordnet, die mit dem jeweiligen Auftrags-Ladehilfsmittel gemeinsam in der Reihe mitwandert. Bevorzugt ist es, wenn diese wie oben beschrieben virtuell mit wandern, wozu eine virtuelle Kommissionieranzeige einem Auftrags-Ladehilfsmittel beim Eintritt in die Reihe zugeordnet (gepaart) wird und mit diesem in der Reihe wandert. Lediglich der reale Anzeigeort wird dann neu aufgrund der Positionsänderung des Auftrags-Ladehilfsmittels verändert. Dazu können stationäre klassische Put-To-Light Anzeigen verwendet werden, die jeweils mit der virtuellen Anzeige verbunden werden. Denkbar wäre auch der Einsatz einer Art Laufdisplay, auf dem die Anzeige durch Veränderung des mit der virtuellen Kommissionieranzeige verbundenen Anzeigebereichs wandert.

Sinnvoll ist es, wenn die Auftrags-Ladehilfsmittel auf einer dritten Fördertechnik unterhalb der zweiten Fördertechnik platzsparend zu gefördert werden. Anschließend können sie mittels eines Hebers auf die zweite Fördertechnik gehoben werden. Somit wird in konstruktiv einfacher Weise eine platzsparende Anordnung geschaffen. Ein weiterer Vorteil besteht in der guten Zugänglichkeit der Kommissionierstation, da der Auftrags-Kreislauf vertikal geführt wird, sind die Stationen frei zugänglich (ohne Überstiege o. a.). Bei Anordnung einer Reihe von Kommissionierplätzen liegt die Fördertechnik nur auf einer Seite der Reihe. Trotzdem befinden sich Quell- und Zielbehälter ergonomisch günstig auf einer Höhe. Weiterhin können auf diese Weise viele Pufferplätze für Aufträge auf geringem Raum untergebracht werden.

Bei Ausgestaltung der Kommissionierstation als Doppelstation, können sich die Stationen die abführende Sammelfördertechnik teilen, so dass weniger Platzbedarf besteht und der Aufwand für diese nur zu 50 % einer Station zugerechnet werden braucht.

Weitere Merkmale und Einzelheiten der Erfindung ergeben sich aus der nachfolgenden Beschreibung der Zeichnung. Es zeigen:
Fig. 1 eine schematische Ansicht einer Kommissionierstation gemäß der Erfindung in der Draufsicht;
Fig. 2 einen Schnitt durch die Kommissionierstation aus Figur 1 entlang der Linie A-A;
Fig. 3 eine schematische Ansicht einer Doppelkommissionierstation gemäß der Erfindung in der Draufsicht und
Fig. 4 einen Schnitt durch die Kommissionierstation aus Figur 3 entlang der Linie B-B.

In den Figuren sind jeweils als Ganzes mit 1 bezeichnete manuelle Kommissionierstationen mit einem Kommissionier 2 dargestellt.

Der Kommissionierstation 1 werden Produktbehälter P auf einer Förderbahn 3 von einer zentralen Fördertechnik 4 zugeführt und nach einem etwa 90 Grad Richtungswechsel auf einer Förderbahn 5 durch die Kommissionierstation 1 durchgefördert.

Der Kommissionierstation 1 werden Auftragsbehälter A auf einer Förderbahn 6 von einer zentralen Fördertechnik 7 zugeführt und über einen Heber 8 von der unteren Ebene gehoben und auf eine höher gelegene Förderbahn 9 transportiert und auf dieser durch die Kommissionierstation 1 durchgefördert.

Die Förderbahnen 3 und 6 dienen dabei als Puffer. Die Förderbahnen 5 und 9 fördern somit die Behälter in quer zu einander verlaufenden Richtungen, so dass der Kommissionierer 2 sich günstiger Weise in einen dadurch gebildeten Eckarbeitsbereich aufhält. Der Behälterwechsel auf der Förderbahn 5 erfolgt besonders schnell, weil sich alter und neuer Behälter gleichzeitig bewegen.

Die Förderbahn 5 mündet auf ein quer dazu verlaufendes abführendes Sammelband 10, das zurück zur zentralen Fördertechnik 4, 7 führt und somit für eine Entsorgung der Produktbehälter P sorgt.

Erfindungsgemäß ist ferner vorgesehen, dass der benutzte Produktbehälter P, d.h. der Kommissionierer gewünschte Artikel für den Kommissionierauftrag entnommen hat, sofort weitertransportiert wird und der nächste Produktbehälter P nachrückt. Es wird also nicht erst die Quittierung der fehlerfreien Ausführung des jeweiligen Kommissionierschritts abgewartet. Damit aber eine Korrektur möglich bleibt, wird der Produktbehälter P, in einer Pufferzone 14 gehalten, die in Reichweite des Kommissionierers liegt, bevor der Produktbehälter P auf das Sammelband 10 gelangt. Somit hat der Kommissionierer ggf. bei einem Fehler noch Zugriff auf die Artikel, um noch weitere Artikel zu greifen oder Artikel zurückzulegen.

Auf der Förderbahn 9 werden die Auftragsbehälter A in einer Reihe durch die Kommissionierstation 1 gefördert. Wenn ein Auftragsbehälter A fertig kommissioniert ist, wird er auf das Sammelband 10 automatisch abgeschoben und somit in die zentrale Fördertechnik 4, 7 zur weiteren Behandlung eingeschleust. Das Sammelband 10 kann sich bis zum Ende des Förderbands 9 erstrecken oder, wie gestrichelt mit 10' angedeutet, sich über die gesamte Länge des Förderbands 9 erstrecken, so dass ein Abschieben auf der ganzen Länge möglich ist.

Das Förderband 9 bildet dabei 6 Kommissionierplätze als Put-Plätze 11 aus, die jeweils mit einer Put-To-Light Anzeige 12 versehen sind, um dem Kommissionierer den Auftragsbehälter A und die Anzahl der Artikel für den anstehenden Kommissionierschritt (Put) anzuzeigen.

Um ein lückenloses Nachrücken der Auftragsbehälter A in der Reihe auf der Förderbahn 9 zu ermöglichen, ist jeder Put-Platz 11 als einzeln steuerbarer und antreibarerer Förderabschnitt 13 ausgebildet. Somit kann trotz Abschieben eines in der Reihe nicht vorne angeordneten Auftragsbehälters A, eine lückenlose Reihe beibehalten werden. Auf diese Förderabschnitts 13 kann verzichtet werden, wenn sich das Sammelband 10 nur bis zum ersten Put-Platz 11 erstreckt (angedeutet durch den nicht gestrichelten Bereich).

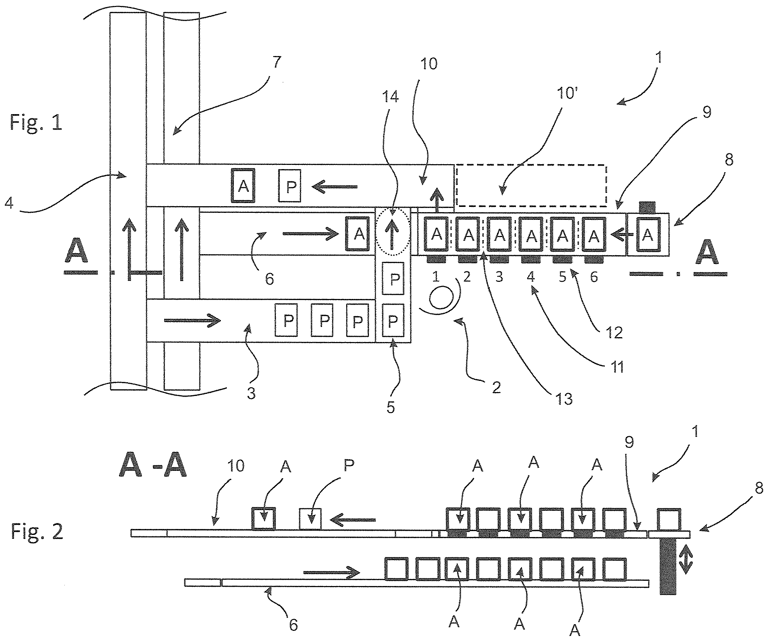

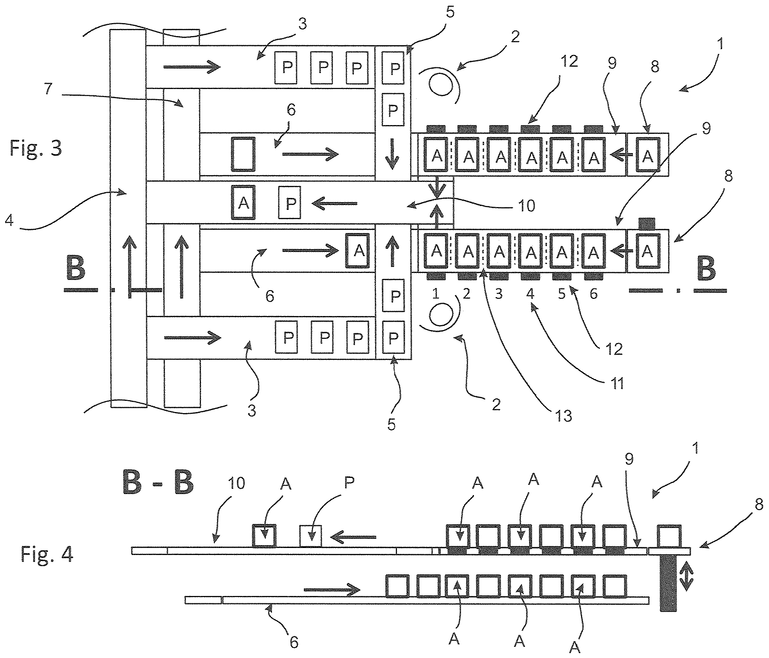

Die Kommissionierstation der Figuren 1 und 2 unterscheidet sich von derjenigen der Figuren 3 und 4 im Wesentlichen nur durch die Verdoppelung mit dem Sammelband 10 als Spiegelachse und damit geteilte Nutzung der abführenden Sammelfördertechnik. Somit werden sich entsprechende Teile beider Kommissionierstationen mit sich entsprechenden Bezugszeichen bezeichnet.

Eine Kommissionierung erfolgt in beiden Stationen wie nachfolgend erläutert in gleicher Weise.

Der Station 1 werden die Auftragsbehälter A zu gefördert und in einer Reihe auf der Förderbahn 9 entsprechend der Put-Plätze 11 angeordnet. Gleichzeitig wird der erste Produktbehälter P auf der Förderbahn 5 bereitgestellt.

Über die Kommissionieranzeigen 12 wird dem Kommissionierer nun angezeigt, wie viele Artikel er aus dem aktuellen Produktbehälter P in die jeweiligen Auftragsbehälter einlegen soll.

Nach Quittierung des Kommissionierschritts wird der benutzte Produktbehälter P zur Sammelstrecke 10 gefahren und abtransportiert. Gleichzeitig wird der nächste Produktbehälter P bereitgestellt und der nächste Kommissionierschritt durchgeführt.

Ist ein Kommissionierauftrag eines Auftragsbehälters abgearbeitet, wird dem Kommissionierer angezeigt, dass der jeweilige Auftragsbehälter A abgeschoben werden kann auf die Sammelstrecke 10 bzw. der Auftragsbehälter A wird automatisch abgeschoben.

Wenn dies der erste Behälter am Put-Platz 1 ist, wird die Reihe der Auftragsbehälter weitergefördert, wobei die Put-Plätze der Auftragsbehälter A wechseln und ein neuer Auftragsbehälter über den Heber 8 bereitgestellt wird.

Dies ist der Standardfall, da der erste Auftragsbehälter in der Reihe auch derjenige ist, dessen angeforderte Produktbehälter am meisten Zeit hatten, um zur Kommissionierstation gefördert zu werden.

Ist dies jedoch ein anderer Auftragsbehälter in der Reihe, rücken die anderen Behälter A nach, wozu die Förderabschnitte 13 entsprechend betrieben und gesteuert werden, und ein neuer Auftragsbehälter wird über den Heber 8 bereitgestellt.

Anschließend beginnt der Vorgang von neuem.

## Patentansprüche

1. Verfahren zum Kommissionieren von Artikeln nach dem Ware-Zum-Mann Prinzip an einer Kommissionierstation (1), in der Artikel in Auftrags-Ladehilfsmittel (A) kommissioniert werden, wobei die Auftrags-Ladehilfsmittel in einer Reihe durch die Kommissionierstation gefördert werden und dabei der jeweilige Put-Platz des Ladehilfsmittels in der Reihe wechselt, **dadurch gekennzeichnet, dass** der Put-Platz (11) des Auftrags-Ladehilfsmittels wechselt, wenn ein historisch innerhalb der Reihe voraus liegendes Auftrags-Ladehilfsmittel fertig kommissioniert und abgeführt wurde und die danach stehenden Auftrags-Ladehilfsmittel rücken auf, so dass die Auftrags-Ladehilfsmittel in einer lückenlosen Reihe durch die Put-Plätze der Kommissionierstation gefördert werden.

2. Verfahren nach Anspruch 1, **dadurch gekennzeichnet, dass** die Artikel in Produkt-Ladehilfsmitteln (P) vorliegen und aus diesen kommissioniert wird.

3. Verfahren nach Anspruch 1, **dadurch gekennzeichnet, dass** dem Kommissionierer (2) bei jedem Kommissioniervorgang das jeweilige Auftrags-Ladehilfsmittel angezeigt wird.

4. Verfahren nach Anspruch 3, **dadurch gekennzeichnet, dass** die Anzeige des jeweiligen Auftrags-Ladehilfsmittels mit dem Auftrags-Ladehilfsmittel mitwechselt.

5. Verfahren nach einem der vorhergehenden Ansprüche, **dadurch gekennzeichnet, dass** die Auftrags-Ladehilfsmittel in einer First-in-First-out (FIFO) Reihe durch die Kommissionierstation gefördert werden.

6. Verfahren nach einem der vorhergehenden Ansprüche, **dadurch gekennzeichnet, dass** benutzte Produkt-Ladehilfsmittel nach Entnahme der gewünschten Artikel für den Kommissionierauftrag aus dem Pick-Platz sofort in eine in Reichweite des Kommissionierers liegende Pufferzone abtransportiert werden und das nächste Produkt-Ladehilfsmittel in den Pick-Platz nachrückt und erst nach Quittierung der fehlerfreien Ausführung des jeweiligen Kommissionierschritts das benutzte Produkt-Ladehilfsmittel aus der Pufferzone und somit aus der Kommissionierstation abtransportiert wird.

7. Kommissionierstation (1) zum Kommissionieren von Artikeln nach dem Ware-Zum-Mann Prinzip, wobei Artikel in Auftrags-Ladehilfsmittel (A) kommissioniert werden, wobei die Artikel auf einer ersten Fördertechnik (5) durch die Kommissionierstation gefördert werden und die Auftrags-Ladehilfsmittel auf einer zweiten Fördertechnik (9) durch die Kommissionierstation gefördert werden, wobei die Auftrags-Ladehilfsmittel gemeinsam in einer lückenlosen Reihe auf der zweiten Fördertechnik durch die Kommissionierstation gefördert werden und jedem Ladehilfsmittel ein wechselnder Put-Platz (11) zugeordnet ist und dass jeder Put-Platz als einzeln steuerbarer und antreibbarer Förderabschnitt (13) der zweiten Fördertechnik ausgebildet ist.

8. Kommissionierstation nach Anspruch 7, **dadurch gekennzeichnet, dass** Auftrags-Ladehilfsmittel von der zweiten Fördertechnik auf eine abführende Sammelfördertechnik (10) abgeschoben werden.

9. Kommissionierstation nach Anspruch 7 oder 8, **dadurch gekennzeichnet, dass** jedem Put-Platz eine Kommissionieranzeige (12) zugeordnet ist, die mit dem jeweiligen Auftrags-Ladehilfsmittel gemeinsam in der Reihe mit wandert.

10. Kommissionierstation nach einem der Ansprüche 7 bis 9, **dadurch gekennzeichnet, dass** die Auftrags-Ladehilfsmittel auf einer dritten Fördertechnik (6) unterhalb der zweiten Fördertechnik zu gefördert werden.

## Claims

1. Method for picking articles according to the goods-to-man principle at a picking station (1), in which articles are picked in order load carriers (A), wherein the order load carriers are conveyed in a row through the picking station and thus the respective put place of the load carrier in the row changes, **characterised in that** the put place (11) of the order load carrier changes when an order load carrier historically preceding in the row has been fully picked and discharged and the subsequent order load carriers move up so that the order load carriers are conveyed in a gap-free row through the put places of the picking station.

2. Method as claimed in claim 1, **characterised in that** the articles are present in product load carriers (P) and picking is carried out therefrom.

3. Method as claimed in claim 1, **characterised in that** in each picking process the respective order load carrier is displayed to the picker (2).

4. Method as claimed in claim 3, **characterised in that** the display of the respective order load carrier changes along with the order load carrier.

5. Method as claimed in any one of the preceding claims, **characterised in that** the order load carriers are conveyed in a first-in-first-out (FIFO) row through the picking station.

6. Method as claimed in any one of the preceding claims, **characterised in that**, after removal of the desired articles for the picking order, used product load carriers are immediately transported away out of the pick place into a buffer zone lying within reach of the picker, and the next product load carrier moves up into the pick place and only after confirmation of the error-free performance of the respective picking step is the used product load carrier transported away out of the buffer zone and therefore out of the picking station.

7. Picking station (1) for picking articles according to the goods-to-man principle, wherein articles are picked in order load carriers (A), wherein the articles are conveyed through the picking station on a first conveying system (5) and the order load carriers are conveyed through the picking station on a second conveying system (9), wherein the order load carriers are conveyed jointly in a gap-free row through the picking station on the second conveying system and each load carrier is allocated a changing put place (11) and that each put place is designed as an individually controllable and operable conveying section (13) of the second conveying system.

8. Picking station as claimed in claim 7, **characterised in that** order load carriers are pushed off the second conveying system onto a discharging gathering conveying system (10).

9. Picking station as claimed in claim 7 or 8, **characterised in that** each put place is allocated a picking display (12) which changes jointly with the respective order load carrier in the row.

10. Picking station as claimed in any one of claims 7 to 9, **characterised in that** the order load carriers are conveyed on a third conveying system (6) below the second conveying system.

## Revendications

1. Procédé de préparation d'articles selon le principe 'Marchandise vers Homme' au niveau d'une station de préparation (1), dans lequel des articles sont préparés dans des moyens auxiliaires de chargement de commandes (A), les moyens auxiliaires de chargement de commandes étant transportés suivant une rangée à travers la station de préparation et la position de placement du moyen auxiliaire de chargement de commandes changeant dans la rangée, **caractérisé en ce que** la position de placement (11) du moyen auxiliaire de chargement de commandes change lorsqu'un moyen auxiliaire de chargement de commande, historiquement en amont dans la rangée, a été préparé et enlevé et les moyens auxiliaires de chargement de commande en aval avancent de sorte que les moyens auxiliaires de chargement de commande sont transportés selon une rangée continue en passant par les positions de placement de la station de préparation.

2. Procédé selon la revendication 1, **caractérisé en ce que** les articles sont présents dans des moyens auxiliaires de chargement de produits (P) et sont préparés à partir de ceux-ci.

3. Procédé selon la revendication 1, **caractérisé en ce que** le moyen auxiliaire de chargement de commandes correspondant est indiqué au préparateur (2) à chaque opération de préparation.

4. Procédé selon la revendication 3, **caractérisé en ce que** l'indication du moyen auxiliaire de chargement de commandes correspondant change conjointement avec le moyen auxiliaire de chargement de commandes.

5. Procédé selon l'une des revendications précédentes, **caractérisé en ce que** les moyens auxiliaires de chargement de commandes sont transportés suivant une première rangée First-in-First-out (FIFO) à travers la station de préparation.

6. Procédé selon l'une des revendications précédentes, **caractérisé en ce que**, après avoir retiré des articles désirés pour la commande à préparer de la position de prélèvement, des moyens auxiliaires de chargement de produits utilisés sont emportés immédiatement jusque dans une zone tampon située à portée du préparateur et le moyen auxiliaire de chargement de produits le plus proche est amené à la position de prélèvement et c'est seulement après avoir accusé réception de la réalisation sans erreur de l'étape de préparation correspondante que le moyen auxiliaire de chargement de produits utilisé est emporté de la zone tampon et donc de la station de préparation.

7. Station de préparation (1) destinée à la préparation d'articles selon le principe 'Marchandise vers Homme', des articles étant préparés dans des moyens auxiliaires de chargement de commandes (A), les articles étant transportés sur un premier système de transport (5) à travers la station de préparation et les moyens auxiliaires de chargement de commandes étant transportés sur un deuxième système de transport (9) à travers la station de préparation, les moyens auxiliaires de chargement de commandes étant transportés conjointement suivant une rangée continue sur le deuxième système de transport à travers la station de préparation et une position de placement changeante (11) est associée à chaque moyen auxiliaire de chargement et chaque position de placement étant conformée en section de transport (13), commandable et entraînable individuellement, du deuxième système de transport.

8. Station de préparation selon la revendication 7, **caractérisée en ce qu'**un moyen auxiliaire de chargement de commandes est poussé du deuxième système de transport sur un système de transport commun d'enlèvement (10).

9. Station de préparation selon la revendication 7 ou 8, **caractérisée en ce que** chaque position de placement est associée à une indication de préparation (12) qui est déplacée conjointement dans la rangée avec le moyen auxiliaire de chargement de commandes correspondant.

10. Station de préparation selon l'une des revendications 7 à 9, **caractérisée en ce que** les moyens auxiliaires de chargement de commandes sont amenés sur un troisième système de transport (6) au-dessous du deuxième système de transport.
